# EUROPÄISCHE PATENTSCHRIFT

(11) **EP 3 526 101 B1**
(45) Veröffentlichungstag und Bekanntmachung des Hinweises auf die Patenterteilung: **07.07.2021**
(21) Anmeldenummer: 17790699.7
(22) Anmeldetag: 10.10.2017
(51) Int. Cl.: B62D 1/184, B62D 1/185, B62D 1/189

(54) **LENKSÄULE FÜR EIN KRAFTFAHRZEUG UND VERFAHREN ZUM HERSTELLEN EINER LENKSÄULE**
STEERING COLUMN FOR A MOTOR VEHICLE, AND METHOD FOR PRODUCING A STEERING COLUMN
COLONNE DE DIRECTION POUR UN VÉHICULE AUTOMOBILE ET PROCÉDÉ DE FABRICATION D'UNE COLONNE DE DIRECTION

(30) Priorität: 14.10.2016 DE 102016220140
(43) Veröffentlichungstag der Anmeldung: 21.08.2019
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT)
(74) Vertreter: thyssenkrupp Intellectual Property GmbH
(86) Internationale Anmeldenummer: PCT/EP2017/075843
(87) Internationale Veröffentlichungsnummer: WO 2018/069339

(56) Entgegenhaltungen:
- WO-A1-2016/142119
- JP-A- 2011 105 122
- KR-A- 20150 042 323
- US-A1- 2008 290 641
- US-A1- 2013 160 594

## Beschreibung

### Stand der Technik

Die Erfindung betrifft eine Lenksäule für ein Kraftfahrzeug, umfassend eine Manteleinheit mit einem Mantelrohr, das zumindest einen Klemmabschnitt aufweist, eine in dem Mantelrohr angeordnete Stelleinheit mit einer darin um eine Längsachse drehbar gelagerten Lenkspindel, eine Klemmschelle, mit zwei einander quer zur Längsachse gegenüberliegenden, über einen Bogenabschnitt miteinander verbundenen Schenkeln, zwischen denen der Klemmabschnitt des Mantelrohrs zumindest teilweise aufgenommen ist, wobei der Bogenabschnitt einen Umfangsbereich des Klemmabschnitts umschlingt,
eine Spanneinrichtung, die in einer Fixierstellung die Klemmschelle auf dem Klemmabschnitt des Mantelrohrs verspannt, wobei der Klemmabschnitt in der Fixierstellung auf der Stelleinheit verspannt ist und die Stelleinheit bezüglich einer Bewegung in Richtung der Längsachse relativ zum Mantelrohr festlegt und in einer Freigabestellung die Klemmschelle von dem Klemmabschnitt entspannt und eine Verstellung der Stelleinheit relativ zum Mantelrohr in Richtung der Längsachse freigibt,
wobei die Spanneinrichtung die Schenkel in Fixierstellung quer zur Längsachse gegeneinander zusammendrückt, und in dem Bogenabschnitt der Klemmschelle zumindest ein gegen den Umfangsbereich des Klemmabschnitts vorstehendes Kraftübertragungselement angeordnet ist.

Zur Anpassung der Lenkradposition an die Sitzposition des Fahrers eines Kraftfahrzeugs sind längenverstellbare Lenksäulen bekannt, bei denen das am hinteren Ende der Lenkspindel angebrachte Lenkrad in Längsrichtung, d.h. in Richtung der Lenksäulen-Längsachse im Fahrzeuginnenraum positioniert werden kann.

Hierzu ist die Stelleinheit in Längsrichtung teleskopartig axial verstellbar in einem Mantelrohr angeordnet, welches auch als äußeres Mantelrohr oder Führungskasten bezeichnet wird und durch eine Halte- oder Trageinheit mit der Fahrzeugkarosserie verbunden ist. Mittels einer lösbaren Spanneinrichtung ist die Stelleinheit in unterschiedlichen Längspositionen entlang der Längsachse feststellbar, d.h. lösbar fixierbar.

Bei einer gattungsgemäßen Lenksäule - wie beispielsweise aus der JP 2011 105122 A bekannt - erfolgt die Fixierung durch eine Klemmschelle, die in einem Klemmabschnitt das Mantelrohr umgreift. Die Spanneinrichtung, auch als Feststelleinrichtung bezeichnet, drückt in Fixierstellung die freien Schenkel der Klemmschelle mit einer Spannkraft gegeneinander, wodurch die Klemmschelle zusammengezogen und auf dem Mantelrohr verspannt wird, welches dabei in seinem durch den Schlitz längs geteilten Klemmabschnitt radial zusammengepresst wird. Dadurch wird die Stelleinheit in dem Klemmabschnitt in dem Mantelrohr verspannt und relativ zum Mantelrohr in Längsrichtung reibschlüssig fixiert. In geöffnetem Zustand der Spanneinrichtung - auch als Freigabestellung oder Löseposition bezeichnet - wird die auf die Schenkel ausgeübte Spannkraft gelöst, wodurch die Klemmschelle entspannt wird und den Klemmabschnitt freigibt. Dabei wird die vom Mantelrohr auf die Stelleinheit ausgeübte radiale Klemmkraft ebenfalls aufgehoben, so dass der Reibschluss zwischen Mantelrohr und Stelleinheit gelöst wird und eine Verschiebung der Stelleinheit gegenüber dem Mantelrohr in Längsrichtung zur Einstellung der Lenkradposition möglich ist.

In der besagten JP 2011 10522 A wird die Klemmschelle beim Verspannen zusammengezogen, wobei die freien Enden der Schenkel und damit die Schenkel in radialer Richtung gegeneinander bewegt werden, und der die Schenkel verbindende, den Klemmabschnitt umschlingende Bogenabschnitt mit seiner über einen Umfangsbereich anliegenden Innenseite von außen gegen den Klemmabschnitt des Mantelrohrs angepresst wird. Durch die Umschlingung wird die Spannkraft von der Klemmschelle auf das Mantelrohr übertragen, und von dem Mantelrohr auf die Stelleinheit, wobei dessen durch den Längsschlitz geteilte Umfangsbereiche gegen die Außenseite der Stelleinheit angedrückt und damit reibschlüssig verbunden werden.

Diese Ausführung mit einer auf dem Klemmabschnitt des Mantelrohrs angebrachten Klemmschelle hat den Vorteil, dass die Klemmschelle und das Mantelrohr als Blechformteile mit geringem Fertigungsaufwand bereitgestellt und einfach montiert werden können, wobei die Stelleinrichtung in dem Mantelrohr sicher geführt und gehalten ist. Nachteilig ist jedoch die ungünstige Übertragung der Spannkraft von der Klemmschelle in den Klemmabschnitt im Bereich der Umschlingung durch den Bogenabschnitt, welche durch die kinematische Anordnung und auftretende Reibung mit geringem Wirkungsgrad von der Klemmschelle auf das Reibpaar zwischen Mantelrohr und Stelleinheit aufgebracht wird. Entsprechend muss eine relativ hohe Spannkraft aufgewandt werden, um eine sichere Fixierung der Stelleinrichtung zu erreichen.

Eine Lenksäule der eingangs genannten Art ist aus der US 2013/0160594 A1 bekannt. Diese weist an der Klemmschelle gegen den Umfangsbereich des Klemmabschnitts vorstehendes Kraftübertragungselemente auf, die diesen beim Fixieren radial zusammenpressen. Angesichts der vorangehend erläuterten Problematik ist es eine Aufgabe der vorliegenden Erfindung, eine Lenksäule der eingangs genannten Art zur Verfügung zu stellen, welche eine verbesserte Verspannung der Stelleinheit in dem Klemmabschnitt des Mantelrohrs ermöglicht.

### Darstellung der Erfindung

Zur Lösung der vorgenannten Problematik wird erfindungsgemäß vorgeschlagen, dass an dem Mantelrohr Mitnehmerelemente angeordnet sind und die Schenkel auf ihren einander zugewandten Seiten Kontaktelemente aufweisen, die in Fixierstellung quer zur Längsachse gegen die einander abgewandten Außenseiten der Mitnehmerelemente andrückbar sind.

Erfindungsgemäß ist vorgesehen, dass an dem Mantelrohr Mitnehmerelemente angeordnet sind, und die Schenkel der Klemmschelle auf ihren einander zugewandten Seiten Kontaktelemente aufweisen, die in Fixierstellung quer zur Längsachse gegen die einander abgewandten Außenseiten der Mitnehmerelemente andrückbar sind.

Erfindungsgemäß ist durch mindestens einen von der inneren Umfangsfläche der Klemmschelle radial nach innen vorspringenden Bereich mindestens ein Kraftübertragungselement gebildet, der als radialer Vorsprung im Bogenabschnitt angeordnet sein kann. Mit seiner nach innen vorstehenden radialen Innenfläche, welche die Kontaktfläche bildet, liegt dieser Vorsprung von außen in der von dem Bogenabschnitt umschlungenen Umfangsfläche im Umfangsbereich des Klemmabschnitts an. Folglich wird von der Klemmschelle die beim Fixieren der Spanneinrichtung ausgeübte Klemmkraft im Bereich des Bogenanschnitts über das oder die Kraftübertragungselemente über deren Kontaktflächen lokal in den Klemmabschnitt des Mantelrohrs eingeleitet. Mit anderen Worten fungiert ein Kraftübertragungselement als Andruckelement, welches beim Fixieren mit der Spannkraft radial von außen gegen das Mantelrohr im Bereich des Klemmabschnitts angedrückt wird.

Dadurch, dass sämtliche an der Klemmschelle ausgebildeten erfindungsgemäßen Kraftübertragungselemente in Summe eine an dem Klemmabschnitt radial von außen anliegende Kontaktfläche haben, die kleiner ist als die den Klemmabschnitt insgesamt umgreifende Bogenfläche des Bogenabschnitts, dies ist die innere Umfangsfläche des Bogenabschnitts, wirkt beim Fixieren der Spanneinrichtung im Bereich der Kontaktflächen eine höhere lokale Flächenpressung, dies ist die Andruckkraft pro Kontaktfläche, als wenn wie im Stand der Technik der gesamte Bogenabschnitt mit seiner gesamten inneren Umfangsfläche mit derselben Spannkraft verspannt wird. Die Spannkraft wird lokal im Bereich der Kontaktflächen konzentriert auf den Klemmabschnitt aufgebracht. Damit ist es möglich, die Kraft definiert über die Kontaktflächen lokal in das Mantelrohr einzuleiten, so dass über das dadurch bewirkte definierte lokale elastische Zusammenpressen des Mantelrohrs eine optimierte Klemmung der Stelleinheit erreicht wird. Dabei wird der Wirkungsgrad der radialen Kraftübertragung zwischen Klemmschelle und Mantelrohr durch eine Verringerung der durch die Spannkraft in Umfangsrichtung in Umfangsrichtung zwischen den Kontaktflächen und dem Mantelrohr wirkenden Reibungskräfte verbessert. Durch die erfindungsgemäßen Kraftübertragungselemente kann eine gegenüber einer Lenksäule ohne Kraftübertragungselemente erhöhte Steifigkeit und Eigenfrequenz bereitgestellt werden.

In einer vorteilhaften Weiterbildung weist das Mantelrohr einen in Richtung der Längsachse verlaufenden Schlitz auf. Durch den Schlitz können die Klemmeigenschaften des Mantelrohrs verbessert werden, da der Schlitz beim Überführen der Spanneinrichtung in die Fixierstellung verschmälert wird, so dass die Stelleinheit in dem Mantelrohr verspannt wird.

Ein Kraftübertragungselement kann in Richtung der Längsachse kürzer sein als der Bogenabschnitt der Klemmschelle. Dadurch, dass es in Längsrichtung kürzer ist als der Bogenabschnitt, bekommt das Kraftübertragungselement eine Kontaktfläche, die kleiner ist als die innere Umfangsfläche des Bogenabschnitts, welcher sich in Richtung der Längsachse über die Länge der Klemmschelle in Richtung der Längsachse erstrecken kann.

Ein Kraftübertragungselement kann sich in Umfangsrichtung über einen Teilbereich des Bogenabschnitts erstrecken. Das Kraftübertragungselement hat dann eine Kontaktfläche in Form eines Zylindermantelsegments. Dadurch, dass der Winkelabschnitt dieses Zylindermantelsegments kleiner ist als der Gesamtwinkel der Umschlingung des Bogenabschnitts um den Klemmabschnitt des Mantelrohrs, wird eine in Umfangsrichtung kleinere Kontaktfläche realisiert.

Bevorzugt hat das Kraftübertragungselement sowohl in Richtung der Längsachse als auch in Umfangsrichtung kleinere Abmessungen als der Bogenabschnitt. Dadurch ist die Kontaktfläche eines Kraftübertragungselements innerhalb der inneren Mantelfläche des Bogenabschnitts in beiden Flächenrichtungen lokal begrenzt. Dies ermöglicht die Einleitung der Spannkraft in das Mantelrohr in einem definierten Umfangsbereich innerhalb einer begrenzten Länge in Längsrichtung. Die Kontaktfläche des Kraftübertragungselements kann gerundet ausgestaltet sein, beispielsweise als Kreis- oder Ellipsenfläche, um lokale Kraftspritzen auf Grund von Kerbwirkungen an scharfkantigen Ecken zu vermeiden.

Es ist vorteilhaft, dass zwei oder mehr Kraftübertragungselemente mit Abstand voneinander in Richtung der Längsachse angeordnet sind. Dadurch erfolgt eine Klemmung des Mantelrohrs und damit der Stelleinheit an zwei in Längsrichtung aufeinander folgenden Positionen. Dies ermöglicht eine definierte Orientierung der Klemmschelle auf dem Mantelrohr in Bereich des Klemmabschnitts parallel zur Längsachse, wodurch die Verspannung der Stelleinheit in dem Klemmabschnitt in definierter Orientierung parallel zur Längsachse erfolgen kann.

Eine bevorzugte Ausführung sieht vor, dass zwei oder mehr Kraftübertragungselemente mit Abstand voneinander in Umfangsrichtung angeordnet sind. Dadurch können die Kraftübertragungselemente ähnlich wie in einem Spannfutter angeordnet werden, beispielsweise indem zwei Kraftübertragungselemente zwischen sich einen Winkel von weniger als 180° einschließen, bevorzugt zwischen 90° und 140°. Dabei können die Kraftübertragungselemente bevorzugt spiegelsymmetrisch zu einer durch den Schlitz und/oder durch die Längsachse gehenden Radialebene angeordnet sein. Der Schlitz kann in einer bevorzugten Ausführungsform den Kraftübertragungselementen bezüglich der Längsachse gegenüberliegen. Dadurch wird das Mantelrohr beim Fixieren zwischen den beiden Kraftübertragungselementen und dem Schlitz - ähnlich wie in einem Dreibackenfutter - in definierter Position relativ zur Längsachse eingespannt.

Es ist vorteilhaft, dass ein Kraftübertragungselement als einstückige Ausformung der Klemmschelle ausgebildet ist. Ein erfindungsgemäßes Kraftübertragungs- oder Andruckelement wird dabei durch einen radial nach innen von der inneren Umfangsfläche im Bereich des Bogenabschnitts vorstehenden Vorsprung gebildet, der durch eine entsprechende Formgebung aus dem Material der Klemmschelle integral geformt sein kann. Beispielsweise kann die Klemmschelle als Blechformteil, bevorzugt aus Stahlblech, ausgebildet sein, in das ein oder mehrere Kraftübertragungselemente in dem Bogenabschnitts durch plastische Umformung des Blechs eingebracht werden können. Beispielsweise kann in einer bevorzugten Ausführung jeweils eine lokale Einformung oder Einprägung radial von außen in den Bogenabschnitt der Klemmschelle eingeformt werden als Sicke oder Mulde in der Außenseite, wodurch auf der Innenseite eine radial nach innen vorstehender Vorsprung entsteht, der ein erfindungsgemäßes Kraftübertragungs- oder Andruckelement bildet. Vorzugsweise erfolgt die Einformung in einem Kaltumformverfahren, welches die Realisierung angepasster Formgebungen der Kraftübertragungselemente in einem rationellen Fertigungsprozess ermöglicht.

Eine vorteilhafte Ausführung kann weiterhin vorsehen, dass der Klemmabschnitt im Umfangsbereich eines Kraftübertragungselements in seiner Außenfläche eine Vertiefung aufweist. Eine Vertiefung kann durch eine Einformung gebildet werden, die radial von außen in einen Umfangsbereich des Mantelrohrs eingebracht ist, der in Umfangsrichtung und in Längsrichtung begrenzt ist. Erfindungsgemäß liegt die Kontaktfläche mindestens eines Kraftübertragungselements innerhalb der Vertiefung an. Durch die räumliche Zuordnung der Kraftübertragungselemente zu den Vertiefungen wird eine definierte Orientierung der Klemmschelle auf dem Klemmabschnitt sichergestellt. Die Spannkraft wird jeweils im Bereich der Einformung in das Mantelrohr eingeleitet.

Es ist vorteilhaft, dass der Klemmabschnitt im Umfangsbereich eines Kraftübertragungselements an seiner die Stelleinheit umschließenden Innenfläche mindestens ein radial nach innen vorstehendes Klemmelement aufweist. Ein derartiges Klemmelement liegt mit seiner radial innen liegenden Kontaktfläche an der Außenseite der Stelleinheit an. Bevorzugt sind mehrere Klemmelemente über den Umfang verteilt angeordnet, so dass die Stelleinheit zur Fixierung zwischen den Kontakt- bzw. Klemmflächen der Klemmelemente festspannbar ist. Die Summe der Kontaktflächen ist kleiner als die innere Gesamt-Umfangsfläche des Klemmabschnitts, so dass die von der Spanneinrichtung über die Klemmschelle auf den Klemmabschnitt ausgeübte Spannkraft mit relativ höherer Flächenpressung über die relativ kleinere Kontaktfläche übertragen wird. Damit kann eine ausreichend hohe Reibungskraft erzeugt werden, die für eine sichere reibschlüssige Fixierung der Stelleinheit erforderlich ist. Durch eine entsprechende über den Umfang verteilte Anordnung kann erreicht werden, dass die Stelleinheit in Fixierstellung zwischen den Kontaktflächen ähnlich wie in einem Spannfutter reibschlüssig gehalten wird.

Besonders vorteilhaft ist es, dass eine Kontaktfläche im Bereich einer Vertiefung in der Außenfläche des Klemmabschnitts angeordnet ist. Entsprechend befindet sich eine Kontaktfläche innen in demselben Umfangsbereich des Mantelrohrs, welcher außen eine Vertiefung aufweist. Durch ein erfindungsgemäßes Kraftübertagungselement kann, wie vorangehend erläutert, die Spannkraft von der Klemmschelle vorteilhaft im Bereich einer Vertiefung in den Klemmabschnitt eingeleitet werden. Dadurch erfolgt eine unmittelbare Kraftübertragung auf die in demselben Bereich innen angeordnete Kontaktfläche. Auf diese Weise wird sichergestellt, die Klemmschelle eindeutig auf dem Klemmabschnitt orientiert werden kann und dass die Spannkraft über die Kraftübertragungselemente der Klemmschelle von außen direkt auf ein Klemmelement wirkt, wobei dessen Kontaktfläche zur Fixierung gegen die Stelleinheit angedrückt wird.

Eine Vertiefung kann bevorzugt als radial von außen eingebrachte Einformung in dem Klemmabschnitt des Mantelrohrs ausgebildet sein, wodurch zugleich eine radial nach innen vorstehende Ausformung entsteht, die ein radial nach innen vorstehendes, vorangehend beschriebenes Klemmelement bildet, welches im Klemmabschnitt an seiner die Stelleinheit umschließenden Innenfläche nach innen vorsteht. Durch die bevorzugt mittels Kaltumformung eingeformte Einformung kann in einem Fertigungsschritt eine Einformung zur Aufnahme eines Kraftübertragungselements und eine radial nach innen vorstehende Ausformung zur Bildung eines Klemmelements realisiert werden.

Es kann vorgesehen sein, dass in den in Umfangsrichtung einander gegenüberliegenden Randbereichen des Schlitzes an dem Mantelrohr Mitnehmerelemente angeordnet sind, und die Schenkel der Klemmschelle auf ihren einander zugewandten Seiten Kontaktelemente aufweisen, die in Fixierstellung quer zur Längsachse gegen die einander abgewandten Außenseiten der Mitnehmerelemente andrückbar sind.

Die Mitnehmerelemente sind vorzugsweise beiderseits des Schlitzes angeordnet und stehen von dem Außenumfang des Mantelrohrs radial nach außen vor. Sie können bevorzugt unmittelbar benachbart zu dem Schlitz angeordnet sein, d.h. entlang der einander in Umfangsrichtung gegenüberliegenden Randbereiche des Schlitzes, so dass sie einander in Umfangsrichtung im Abstand der Schlitzbreite, also der Breite des Schlitzes quer zur Längsachse gemessen, d.h. in Umfangsrichtung, einander gegenüberliegende Innenseiten aufweisen.

Die Mitnehmerelemente können als radial vorstehende Vorsprünge ausgebildet sein, die sich abschnittweise über einen Teilbereich der axialen Länge des Schlitzes oder auch über dessen gesamte Länge erstrecken können. Bezüglich des Schlitzes sind die Mitnehmerelemente jeweils paarweise in Umfangsrichtung, d.h. quer zur Längsachse gegenüberliegend angeordnet, wobei sie jeweils einander zugewandte, auf beiden Seiten des Schlitzes gegenüberliegende Innenseiten aufweisen, und von dem Schlitz in Umfangsrichtung abgewandte Außenseiten, die jeweils Außenflächenbereiche mit einer vom Schlitz aus gesehen im Wesentlichen tangential zum Außenumfang des Mantelrohrs nach außen weisenden Flächennormalen aufweisen.

In Umfangsrichtung gesehen von dem Schlitz abgewandt befindet sich jeweils die Außenseiten eines Mitnehmerelements, d.h. die Außenseiten der einander gegenüberliegenden Mitnehmerelemente sind in Umfangsrichtung voneinander abgewandt. Von der Längsachse des Mantelrohrs aus gesehen erstrecken sich die Außenseiten im Wesentlichen radial nach außen, so dass sie Flächenbereiche umfassen, die parallel zu einer Längsebene liegen, in der die Längsachse liegt und die sich durch den Schlitz erstreckt.

An der Klemmschelle können mit den Mitnehmerelementen korrespondierende Kontaktelemente angeordnet sein. Die Kontaktelemente sind derart auf den in Umfangsrichtung einander zugewandten Innenseiten der Schenkel positioniert, dass der Schlitz und die am Rand des Schlitzes befindlichen Mitnehmerelemente in Umfangsrichtung zwischen den einander gegenüberliegenden Kontaktelementen liegen. Dabei stehen die Kontaktelemente von den Schenkeln ab, so dass sie bezogen auf den Außenumfang des Klemmabschnitts vorwiegend in tangentialer Richtung bezogen auf den Außenumfang des Mantelrohrs gegen die Mitnehmerelemente gerichtet sind. Dies hat zur Folge, dass die Kontaktelemente beim Fixieren der Spanneinrichtung zusammen mit den dabei im Umfangsrichtung aufeinander zu bewegten Innenseiten der Schenkel ebenfalls aufeinander zu bewegt werden, d.h. bezüglich des Umfangs des Mantelrohrs im Bereich des Schlitzes im Wesentlichen in tangentialer Richtung. Dabei kontaktieren sie jeweils die Außenseiten der einander gegenüberliegenden Mitnehmerelemente in Umfangsrichtung, d.h. in tangentialer Richtung bezogen auf den Außenumfang des Klemmabschnitts. Dadurch bewegen sie beim Fixieren der Spanneinrichtung die einander in Umfangsrichtung gegenüberliegenden Mitnehmerelemente in Umfangsrichtung gegeneinander.

Entsprechend wird dabei von der Spanneinrichtung die Spannkraft über die Schenkel der Klemmschelle und über die Kontaktabschnitte der Spanneinrichtung überwiegend in Umfangsrichtung bzw. tangential auf die Mitnehmerelemente des Mantelrohrs übertragen, so dass die einander gegenüberliegenden Randbereiche des Schlitzes gegeneinander gezogen werden. Mit anderen Worten wirkt die Spannkraft auf die Randbereiche in Richtung der Schlitzbreite, d.h. sie wirkt unmittelbar auf eine Verringerung der Schlitzbreite hin. Dadurch wird ein Teil der Spannkraft als Zugspannung in den Umfang des Mantelrohrs im Klemmabschnitt eingeleitet.

Im Bogenabschnitt wird erfindungsgemäß die Spannkraft von der Klemmschelle in der oben beschriebenen Weise über die Kraftübertragungselemente auf den Klemmabschnitt übertragen. Dadurch ergibt sich eine effizientere Übertragung der Spannkraft von der Spanneinrichtung über die Klemmschelle auf den Klemmabschnitt, und von dem Klemmabschnitt auf die Stelleinheit.

Über die erfindungsgemäßen Kraftübertragungselemente wird die Spannkraft im Bogenabschnitt lokalisiert im Bereich der Kontaktflächen auf den Klemmabschnitt des Mantelrohrs übertragen, und - falls Kontaktelemente wie vorangehend beschrieben realisiert sind - an den Schenkeln über die dort angeordneten Kontaktflächen ebenfalls auf den Klemmabschnitt aufgebracht. Die Klemmung des Klemmabschnitts kann somit zwischen den Kontaktflächen der Kraftübertragungselemente und der Schenkel erfolgen.

Bevorzugt kann die Klemmschelle im Wesentlichen U-förmig ausgebildet sein. Unter im Wesentlichen U-förmig wird verstanden, dass die Schenkel, die über den Bogenabschnitt miteinander verbunden sind, parallel ±10° zueinander ausgerichtet sind. Die Schenkel sind zueinander beabstandet, wobei zwischen den freien Enden der Schenkel ein einziger Spalt ausgebildet ist.

Bevorzugt weist der Klemmabschnitt genau einen einzigen Schlitz auf. Dieser Schlitz wird durch die Überführung der Spanneinrichtung ausgehend von der Freigabestellung in die Fixierstellung verschmälert.

Es kann vorgesehen sein, dass die Mitnehmerelemente des Mantelrohrs und die Kontaktelemente der Klemmschelle durch Schweißen miteinander verbunden sind. Nach der Schweißoperation kann vorgesehen sein, dass ein Dorn in das Mantelrohr eingeführt wird, um den Innendurchmesser des Mantelrohrs genau einzustellen. Mit anderen Worten kann nach dem Schweißen ein Kalibrieren des Innendurchmessers des Mantelrohrs vorgesehen sein, um einen Schweißverzug auszugleichen.

Die Mitnehmerelemente können bevorzugt von dem Mantelrohr radial nach außen vorstehen. Sie weisen beiderseits des Schlitzes einander gegenüberliegende Innenseiten auf, die bevorzugt im Abstand der Schlitzbreite voneinander entfernt sind und Innenflächenbereiche mit im Wesentlichen gegeneinander gerichteten Flächennormalen aufweisen. Auf ihren dem Schlitz in tangentialer bzw. Umfangsrichtung abgewandten Außenseiten sind Flächenbereiche als Mitnehmerflächen mit voneinander weg gerichteten, vorwiegend tangential bezüglich des Mantelrohrs in den Randbereichen des Schlitzes weisenden Flächennormalen ausgebildet, die von den Kontaktelementen im Wesentlichen in tangentialer Richtung kontaktiert werden können.

Eine vorteilhafte Ausführung der Erfindung sieht vor, dass zumindest ein Mitnehmerelement als Aufbiegung des Mantelrohrs in zumindest einem Teilbereich des Randbereiches des Schlitzes ausgebildet ist. Dabei wird ein Mitnehmerelement dadurch gebildet, dass ein in Richtung der Längsachse, d.h. in Längsrichtung verlaufender axialer Randbereich des Schlitzes zumindest abschnittweise bezüglich der Längsachse nach außen gebogen oder abgekantet wird, so dass der umgebogene Randabschnitt des Randbereichs ein Mitnehmerelement bildet. Die Aufbiegung kann etwa im Bereich von 90° +/- 20° erfolgen, so dass die einander gegenüberliegenden aufgebogenen Randflächenbereiche im Wesentlichen parallel zueinander und zu einer Längsebene liegen, die sich durch den Schlitz erstreckt und in der die Längsachse liegt. Die Mitnehmerelemente können einstückig mit dem Mantelrohr ausgebildet sein durch Umformung des Mantelrohrs im Randbereich des Schlitzes, beispielsweise durch eine Auf- bzw. Umbiegung, Prägung, Stauchung, Bördelung oder dergleichen. Mit anderen Worten ist das Mitnehmerelement und das Mantelrohr ein einstückiges integrales Bauteil. Alternativ kann an dem Mantelrohr eine Rippe, ein Steg oder ein sonstiger Vorsprung befestigt werden.

Vorzugsweise kann die Aufbiegung der Wandung des Mantelrohrs erfolgen, wenn das Mantelrohr als dünnwandiges Stahlrohr ausgebildet ist, entweder als nahtloses Rohr oder als Blechformteil. Dadurch können die Mitnehmerelemente fertigungstechnisch besonders effizient durch radial nach außen aufgebogene Wandungsbereiche bzw. Blechabschnitte gebildet werden.

Eine Ausführung der Erfindung kann vorsehen, dass zumindest ein Kontaktelement von einem Schenkel quer zur Längsachse nach innen in Umfangsrichtung vorsteht. Dabei ist es möglich, dass zumindest ein Kontaktelement an einem zum Mantelrohr hin umgebogenen Endbereich zumindest eines Schenkels ausgebildet ist. Erfindungsgemäß sind die Kontaktelemente auf den einander zugewandten Innenseiten der Schenkel angebracht, die beim Verspannen der Spanneinrichtung gegeneinander bewegt werden. Dabei stehen die Kontaktelemente bevorzugt so weit nach innen vor, dass sie bereits in entspanntem Zustand der Spanneinrichtung an den Außenseiten der Mitnehmerelemente anliegen. Dies kann beispielsweise dadurch realisiert werden, dass ein Endabschnitt am freien Ende des Schenkels nach innen umgeformt wird, beispielsweise radial nach innen umgebogen wird. Der eigentliche Kontaktbereich des Kontaktelements kann dann am Rand des umgeformten Bereichs ausgebildet sein, so dass er erfindungsgemäß ein Mitnehmerelement an einer Mitnehmerfläche auf dessen Außenseite in tangentialer Richtung kontaktieren kann.

Es ist vorteilhaft, dass die Klemmschelle als Blechformteil, vorzugsweise als einstückiges integrales Bauteil ausgebildet ist. Dies ermöglicht eine rationelle Fertigung und eine flexible Formgebung. Die Schenkel können zusammen mit dem Bogenabschnitt auf einem Blechzuschnitt geformt werden. Weiterhin können die freien Endbereiche der Schenkel radial nach innen umgebogen werden, wobei an den dann zum Mantelrohr weisenden Enden weitere Umformungen erfolgen können, um das Kontaktelement auszubilden. Insbesondere kann durch weitere Umformung sichergestellt werden, dass das Kontaktelement beim Verspannen der Schenkel sicher in tangentialer Richtung gegen das jeweils korrespondierende Mitnehmerelement bewegt werden kann. Ein oder mehrere Kraftübertragungselemente können ebenfalls einstückig in das Blechteil eingeformt werden, beispielsweise durch die oben beschriebenen Vertiefungen.

Das Mantelrohr kann ebenfalls als Blechformteil ausgebildet sein, mit einem einstückig geformten Klemmabschnitt.

Bevorzugt kann das Mantelrohr aus Stahl oder einer Aluminiumlegierung beschaffen sein. Die Klemmschelle kann aus Stahl gefertigt sein, bevorzugt aus Stahlblech.

Der Klemmabschnitt ist vorzugsweise in einem Endbereich des Mantelrohrs ausgebildet.

Der Schlitz kann dann als in Längsrichtung parallel zur Längsachse verlaufender Schlitz ausgebildet werden, der zu einem Ende des Mantelrohrs hin offen ist. Dieser Längsschlitz erstreckt sich folglich von einem Ende des Mantelrohrs aus und kann besonders einfach von der Stirnseite aus in Längsrichtung eingebracht, beispielsweise eingefräst werden.

Der Klemmabschnitt hat bevorzugt einen definierten Innendurchmesser, der relativ zum Außendurchmesser der Stelleinheit ein definiertes Spiel in radialer Richtung hat. Dadurch kann ein definiertes Spannverhalten beim Fixieren der Lenksäule erreicht werden. Bevorzugt wird der Innendurchmesser des Mantelrohrs im Klemmabschnitt bei der Produktion kalibriert.

Zur Anbringung der Lenksäule in einem Fahrzeug kann das Mantelrohr zwischen zwei Seitenwangen einer Trageinheit gelagert sein, die an einer Fahrzeugkarosserie anbringbar ist. Derartige Trageinheiten sind bekannt und umfassen in der Regel zwei quer zur Längsachse vorstehende Seitenwangen, die sich ebenfalls quer zur Längsachse gegenüberliegen und das Mantelrohr zwischen sich aufnehmen können. Dadurch, dass die Seitenwangen mittels einer Spanneinrichtung, üblicherweise der genannten Spanneinrichtung für die Längsverstellung, gegeneinander und damit von außen gegen das Mantelrohr verspannt werden können, kann das Mantelrohr reibschlüssig an der Trageinheit fixiert werden. Dabei ist es möglich, dass das Mantelrohr an seinem vorderen, dem Lenkrad abgewandten Endbereich um eine Schwenkachse schwenkbar gelagert ist und die Fixierung an unterschiedlichen Positionen in der Erstreckung der Seitenwangen erfolgen kann, so dass eine Höhenverstellung der Lenkradposition realisiert werden kann. Bei der erfindungsgemäßen Lenksäule können die Seitenwangen von außen an der Klemmschelle anliegen, bevorzugt im Bereich der Schenkel. Beim Fixieren mittels der Spanneinrichtung wird somit die Klemmschelle an der Trageinheit fixiert, das Mantelrohr in der beschriebenen Weise an der Klemmschelle, und die Stelleinheit in dem Mantelrohr.

Eine vorteilhafte Ausführung der Erfindung sieht vor, dass die Spanneinrichtung einen quer zur Längsachse durch die Schenkel durchgehenden Spannbolzen aufweist, der mit einem Widerlager und einem Spanngetriebe verbunden ist, wobei sich das Widerlager außen auf dem einen Schenkel und das Spanngetriebe sich außen auf dem anderen Schenkel abstützt. Das Spanngetriebe kann in an sich bekannter Weise als Hubgetriebe ausgebildet sein, welches sich von außen auf dem einen Schenkel abstützt und bei Betätigung eines Betätigungselements, in der Regel eines manuell bedienbaren Spannhebels, auf den Spannbolzen eine nach außen gerichtete Spannkraft ausübt. Dadurch zieht der Spannbolzen über das außen auf dem anderen Schenkel abgestützte Widerlager diesen anderen Schenkel gegen den einen Schenkel. Dadurch wird die Klemmschelle zwischen den Schenkeln reibschlüssig eingespannt. Derartige Spanneinrichtungen sind im Prinzip bekannt und können als Hubgetriebe beispielsweise Keil-, Nocken- oder Kippstift-Getriebe aufweisen, die eine Drehung des Spannbolzens in einen Spannhub bzw. eine Spannkraft umsetzen.

Alternativ zu einem Betätigungshebel kann die Spanneinrichtung auch durch einen motorischen Antrieb betätigt werden.

Bei der Erfindung ist der Spannbolzen vorzugsweise durch Öffnungen in den gegenüberliegenden Schenkeln hindurchgeführt, die sich in der Nähe der Endbereiche befinden.

Bevorzugt ist der Spannbolzen orthogonal zur Längsachse angeordnet und weist einen Abstand zur Längsachse auf.

Wenn das Mantelrohr in einer Trageinheit gehaltert ist, kann der Spannbolzen die Seitenwangen der Trageinheit durchsetzen. Bevorzugt weisen die Seitenwangen Langlöcher auf, durch die der Spannbolzen hindurchgeführt ist und in denen der Spannbolzen in Höhenrichtung verschiebbar ist zur Verstellung der Höhenposition.

Der Schlitz kann an zumindest einem Ende eine Aufweitung in Umfangsrichtung aufweisen. Die Aufweitung kann im Endbereich des Schlitzes innerhalb der Längserstreckung des Mantelrohrs einen in Umfangsrichtung, quer zur Längserstreckung verlaufenden Schlitzbereich umfassen, so dass der Schlitz T-förmig ausgebildet ist. Dadurch wird erreicht, dass beim Verspannen der durch den Schlitz voneinander getrennten Bereiche des Klemmabschnitts auf der Stelleinheit keine unerwünscht hohen Materialspannungen im Endbereich des Schlitzes auftreten. Weiterhin wird dadurch eine gleichmäßigere Verspannung in der Fixierstellung erreicht.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Ansicht,
- Figur 2: die Lenksäule gemäß Figur 1 in einer teilweise auseinander gezogenen Darstellung,
- Figur 3: eine Detailansicht der Lenksäule gemäß Figur 2,
- Figur 4: die Detailansicht gemäß Figur 3 in einer auseinander gezogenen Darstellung,
- Figur 5: eine Detailansicht der Lenksäule gemäß Figur 3,
- Figur 6: eine Querschnittansicht durch die Lenksäule gemäß Figur 1,
- Figur 7: eine Querschnittansicht durch den Klemmabschnitt der Lenksäule gemäß Figur 1
- Figur 8: eine Querschnittansicht durch den Klemmabschnitt einer alternativen Lenksäule,
- Figur 9: eine Draufsicht auf die Klemmschelle gemäß den Figuren 1 bis 7,
- Figur 10: eine Draufsicht auf eine Klemmschelle in einer zweiten Ausführungsvariante,
- Figur 11: eine Draufsicht auf eine Klemmschelle in einer dritten Ausführungsvariante,
- Figur 12: eine Draufsicht auf eine Klemmschelle in einer vierten Ausführungsvariante,
- Figur 13: eine Draufsicht auf eine Klemmschelle in einer fünften Ausführungsvariante,
- Figur 14: eine Draufsicht auf eine Klemmschelle in einer sechsten Ausführungsvariante.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

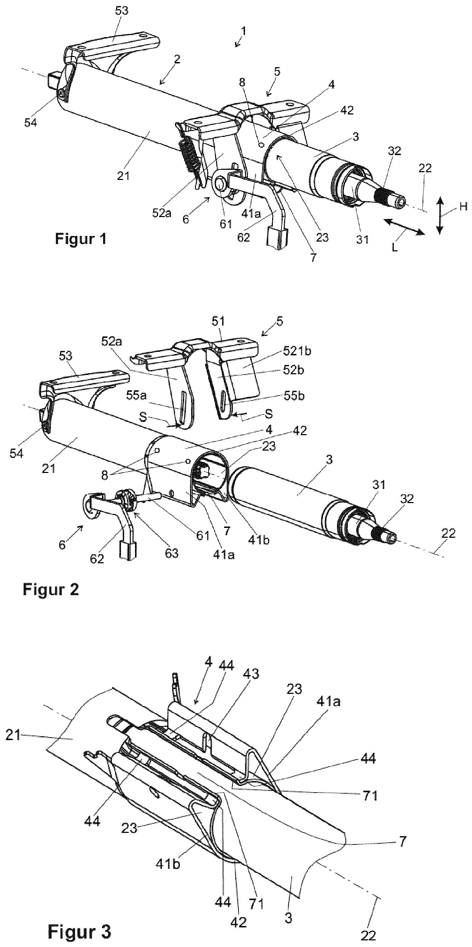

Figuren 1 und 2 zeigen eine Lenksäule 1, die eine Manteleinheit 2 mit einem Mantelrohr 21 umfasst, in dem eine Stelleinheit 3 mit einer darin um die Längsachse 22 drehbar gelagerten Lenkspindel 31 aufgenommen ist. An einem bezüglich der Fahrtrichtung hinteren Befestigungsabschnitt 32 kann ein nicht dargestelltes Lenkrad befestigt werden.

Das Mantelrohr 21 weist an seinem dem Betrachter zugewandten Endbereich einen Klemmabschnitt 23 auf, auf dem eine Klemmschelle 4 angeordnet ist. In dem Klemmabschnitt 23 weist das Mantelrohr 21 einen Schlitz 7 auf (siehe Figuren 3, 4 oder 7), der sich in Längsrichtung parallel zur Längsachse 22 erstreckt und zum hinteren Ende des Mantelrohrs 21 - das ist in Figur 1 bis 4 das dem Betrachter zugewandte Ende - hin offen ist.

Eine Trageinheit 5 mit einem an einer nicht dargestellten Fahrzeugkarosserie anbringbaren Tragelement 51 nimmt das Mantelrohr 21 im Bereich des Klemmabschnitts 23 zwischen zwei von oben quer zur Längsachse 22 vorstehenden Seitenwangen 52a und 52b auf. Die Seitenwange 52b weist einen Versteifungsabschnitt 521b auf, durch den die Seitenwange 52b biegesteifer ausgebildet ist als die Seitenwange 52a. Zwischen den Seitenwangen 52a und 52b befindet sich die Klemmschelle 4, die den Klemmabschnitt 23 des Mantelrohrs 21 umschließt. Die Klemmschelle 4 ist als Blechformteil im Wesentlichen U-förmig ausgebildet mit Schenkeln 41a und 41b, die über einen Bogenabschnitt 42 miteinander verbunden sind. Der Bogenabschnitt 42 umschlingt die zylindrische Außenfläche des Mantelrohrs 21 im Bereich des Klemmabschnitts 23.

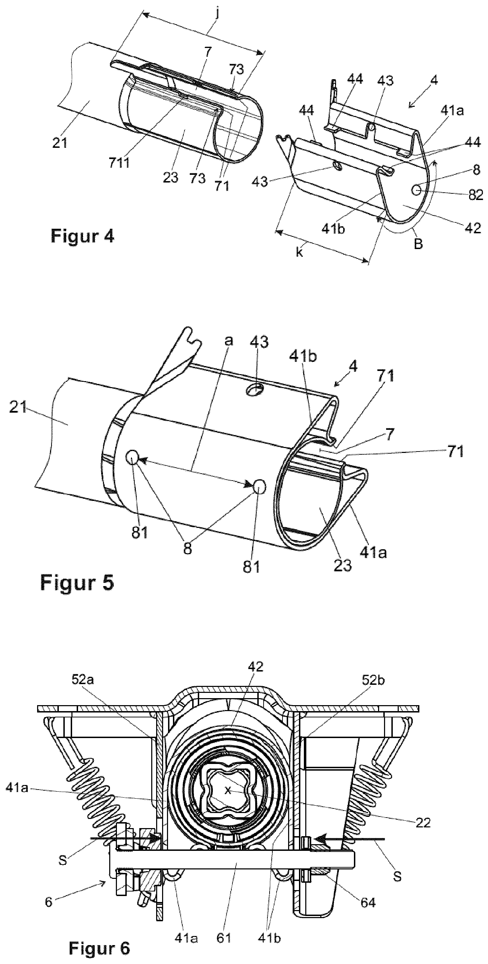

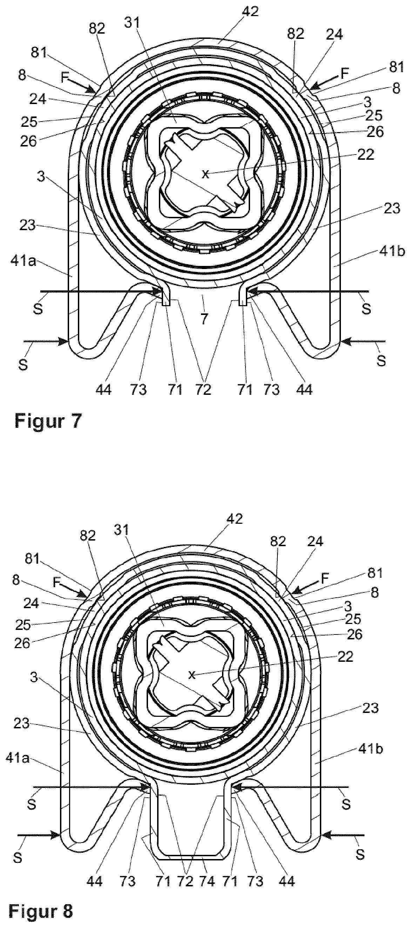

Eine Spanneinrichtung 6 umfasst einen Spannbolzen 61, der sich quer zur Längsachse 22 durch Öffnungen 55a und 55b in den Seitenwangen 52a und 52b erstreckt. An dem Spannbolzen 61 ist ein Betätigungshebel 62 angebracht, mit dem er manuell um seine Achse gedreht werden kann. Der Spannbolzen 61 ist mit einem Spanngetriebe 63 verbunden, welches als Hubgetriebe ausgebildet ist, beispielsweise als Nocken-, Keil- oder Kippstiftgetriebe, und welches sich außen auf der einen Seitenwange 52a abstützt. Über ein Widerlager 64 (siehe Figur 5) stützt sich der Spannbolzen 61 auf der dem Betrachter abgewandten Seite von außen auf der anderen Seitenwange 52b ab. Wird die Spanneinrichtung 63 durch drehende Betätigung des Spannhebels 62 in Fixierstellung gebracht, wird der Spannbolzen 61 durch das Spanngetriebe 63 relativ zur Seitenwange 52a herausgehoben bzw.-gezogen und zieht dabei die andere Seitenwange 52b mit der Spannkraft S gegen die eine Seitenwange 52a heran. Dabei werden die Seitenwangen 52a und 52b derart gegeneinander mit der Spannkraft S zusammengedrückt, wie in Figur 6 und Figur 7 mit den Kraftpfeilen S angedeutet.

In Fixierstellung ist die Klemmschelle 4 und damit das Mantelrohr 21 reibschlüssig zwischen den Seitenwangen 52a und 52b eingespannt. Durch die dabei ausgeübte Spannkraft S wird auch die Stelleinheit 3 im Klemmabschnitt 23 reibschlüssig verspannt, wie weiter unten noch im Detail erläutert wird.

Wird die Spanneinrichtung 6 in Freigabe- oder Lösestellung gebracht, wird die auf die Seitenwangen 52a und 52b ausgeübte Spannkraft S gelöst, wodurch die Klemmschelle 4 entspannt wird und den Klemmabschnitt 23 freigibt, so dass der Reibschluss zwischen Mantelrohr 21 und Stelleinheit 3 gelöst wird. Dadurch ist eine Verschiebung der Stelleinheit 3 gegenüber dem Mantelrohr 21 in Längsrichtung L - parallel zur Längsachse 22 - zur Einstellung der Lenkradposition möglich.

An einem zweiten Tragelement 53, welches ebenfalls an der Fahrzeugkarosserie anbringbar ist, ist das hintere Ende des Mantelrohrs 21 um eine quer zur Längsachse 22 liegende Schwenkachse 54 schwenkbar gelagert. Um diese Schwenkachse 54 kann das Mantelrohr 21 in Freigabestellung der Spanneinrichtung 6 verschwenkt werden, wobei der Spannbolzen 61 in den schlitzförmigen Öffnungen 55a und 55b in Höhenrichtung H bewegt werden kann, um die Höhenposition des Lenkrads einzustellen. In Fixierstellung ist das Mantelrohr 21 über die Klemmschelle 4 an den Seitenwangen 52a und 52b reibschlüssig in der eingestellten Höhenposition fixiert.

Figur 3 zeigt eine Teilansicht des Mantelrohrs 21, wo die Klemmschelle 4 den Klemmabschnitt 23 umgreift, der im hinteren Endbereich des Mantelrohrs 21 ausgebildet ist. Figur 4 zeigt in derselben Perspektive die Klemmschelle 4 von dem Klemmabschnitt 23 demontiert, wobei sie in Richtung der Längsachse 22 nach hinten abgezogen dargestellt ist.

In Figur 3 und 4 ist erkennbar, wie sich der Schlitz 7 über eine Länge j in Längsrichtung von dem offenen Ende des Mantelrohrs 21 erstreckt, d.h. zu diesem Ende hin offen ist. Im dargestellten Beispiel ist die Länge j größer als die Länge k der Klemmschelle 4, welche der Länge des Klemmabschnitts 23 entspricht. Die Klemmschelle 4 hat zwei Schenkel 41a und 41b, die einander beiderseits des Schlitzes 7 gegenüberliegen und über einen Bogenabschnitt 42 miteinander verbunden sind. Der Bogenabschnitt 42 umschlingt den Klemmabschnitt 23 in einem Bogenwinkel B, der einen Betrag von etwa 180° hat, so dass die beiden Schenkel 41a und 41b im Wesentlichen parallel zueinander verlaufen. Im Bereich ihrer freien Enden weisen die Schenkel 41a, 41b eine Öffnung 43 auf, durch die in zusammengebauten Zustand gemäß Figur 1 der Spannbolzen 61 quer zur Längsachse 22 hindurchgeht, wie dies der Querschnittdarstellungen von Figur 5 und Figur 7 entnehmbar ist.

Figur 5 zeigt in einer perspektivischen Darstellung, wie die Klemmschelle 4 auf dem Klemmabschnitt 23 angebracht ist und diesen dabei mit dem Bogenabschnitt 42 umschlingt. Im Bereich des Bogenabschnitts 42 sind erfindungsgemäße Kraftübertragungselemente 8 angeordnet. Im gezeigten Beispiel sind sie durch kreisflächenförmige Einformungen 81 ausgebildet, die radial von außen plastisch in die Außenfläche des Bogenabschnitts 42 eingeformt sind, beispielsweise durch Kaltumformen mittels eines Umformstempels. In Richtung der Längsachse 22 sind zwei Kraftübertragungselemente 8 im axialen Abstand a angeordnet, der kleiner ist als die Länge k des Bogenabschnitts 42 der Klemmschelle 4.

Aus der Querschnittdarstellung von Figur 7 geht hervor, dass die Kraftübertragungselemente 8 jeweils im Bereich der Einformung 81 radial nach innen gegen die Außenseite des Klemmabschnitts 23 vorstehen und gegen diesen mit ihrer radial innen liegenden Kontaktfläche 82 anliegen.

Aus der Zusammenschau der Figuren 4, 5 und 7 geht hervor, dass in dem gezeigten Beispiel insgesamt vier Kraftübertragungselemente 8 vorhanden sind. Sie sind jeweils paarweise auf dem Umfang angeordnet, und zwar symmetrisch zu einer durch die Mitte des Schlitzes 7 und die Längsachse 22 gehenden Radialebene. Bezüglich der Längsachse 22 schließen die Kraftübertragungselemente 8 im gezeigten Beispiel einen Winkel von etwa 100° (± 20°) ein.

In dem Umfangsbereich, in dem die Kraftübertragungselemente 8 mit ihren Kontaktflächen 82 anliegen, weist der Klemmabschnitt 23 Klemmelemente 24 auf. Diese stehen auf der Innenseite des Klemmabschnitts 23 radial nach innen vor, und erstrecken sich segmentförmig über einen Teilbereich des Umfangs. Sie werden im gezeigten Beispiel durch radiale Einformungen 25 in dem Mantelrohr 21 gebildet, die als Vertiefungen radial von außen in den Klemmabschnitt 23 eingeformt sind, bevorzugt durch Kaltumformung. Mit ihren radial nach innen vorstehenden Kontaktflächen 26, welche sich ebenfalls über Teilbereiche des Umfangs erstrecken, können die Klemmelemente 24 zur Fixierung reibschlüssig mit der Außenfläche der Stelleinheit 3 in Kontakt gebracht und durch die Spannkraft verspannt werden.

Die radial nach innen vorstehenden Kraftübertragungselemente 8 kommen mit ihren Kontaktflächen 82 innerhalb der Einformungen 25 mit dem Klemmabschnitt 23 in Kontakt, also im Bereich der darin nach innen gegen die Stelleinheit vorstehenden Klemmelemente 24.

Längs des Schlitzes 7 sind entlang der in Längsrichtung verlaufenden, einander gegenüberliegenden Schlitzränder Mitnehmerelemente 71 ausgebildet, die in dargestellten Beispiel durch radial um etwa 90° nach außen aufgebogene Wandungsbereiche des Mantelrohrs 21 gebildet werden, wie Figur 6 gezeigt. Die Mitnehmerelemente 71 haben einander in Umfangsrichtung - d.h. bezogen auf den Umfang des Klemmabschnitts 23 in tangentialer Richtung - gegenüberliegende Innenflächen 72, und in Umfangsrichtung voneinander abgewandte Außenflächen, die Kontaktflächen 73 bilden. Die Kontaktflächen 73 und die Innenflächen 72 liegen parallel zueinander und zu einer Längsebene, in der die Längsachse 22 liegt und die sich durch die Mitte des Schlitzes 7 radial nach außen erstreckt. Das Mitnehmerelement 71 weist eine Aussparung 711 auf, durch die sich der Spannbolzen 61 erstreckt. Im Fall einer unfallbedingten Kollision des Fahrzeuges bietet sich die Möglichkeit, dass sich der Spannbolzen 61 in Richtung der Längsachse 22 an dem Rand des Mitnehmerelement 71 abstützt.

Die freien Enden der Schenkel 41a und 41b sind nach innen umgebogen zur Bildung von Kontaktelementen 44, die bis zu den Randbereichen des Schlitzes 7 vorstehen. Dort treffen sie in Umfangsrichtung, d.h. in tangentialer Richtung bezüglich des Außenumfangs des Mantelrohrs 21 im Klemmabschnitt 23 auf die radial vorstehenden Kontaktflächen 73 der Mitnehmerelemente 71.

Wird die Spanneinrichtung 6 in Fixierstellung gebracht, wird von dem Spannbolzen 61 über die Seitenwangen 52a und 52b die Spannkraft S von außen auf die Schenkel 41a und 41b der Klemmschelle 4 aufgebracht. Durch die Umschlingung wird die Spannkraft S im Bereich des Bogenabschnitts 42 radial nach innen gegen dem Klemmabschnitt 23 umgelenkt. Während dadurch im Stand der Technik die gesamte Innenfläche des Bogenabschnitts 42 von außen gegen den umschlungenen Bereich des Klemmabschnitts 23 angepresst wird, wird die Andruckkraft F erfindungsgemäß über die Kontaktflächen 82 der Kraftübertragungselemente 8 radial von außen in den Klemmabschnitt 23 eingeleitet. Die Einleitung erfolgt in die Einformungen 25, wo sich auf der Innenseite des Klemmabschnitts 23 die nach innen vorstehenden Klemmelemente 24 befinden. Dadurch wird die Spannkraft über die Kraftübertragungselemente 8 der Klemmschelle 4 und die Klemmelemente 24 des Klemmabschnitts 23 besonders effizient zur reibschlüssigen Fixierung in das Reibpaar zwischen den Kontaktflächen 26 der Klemmelemente 24 und der Außenfläche des Stellelements 3 eingekoppelt. Dadurch kann für eine gegebene Spannkraft S eine höher belastbare reibschlüssige Fixierung der Lenksäule 1 als im Stand der Technik erreicht werden.

Dadurch, dass die Schenkel sich mit ihren Kontaktelementen 44 in Umfangsrichtung gegen die außen liegenden Kontaktflächen 73 der Mitnehmerelemente 71 abstützen, werden die Mitnehmerelemente 71 von den gegenüberliegenden Rändern des Schlitzes 7 her gegeneinander mit der Spannkraft S zusammengedrückt. Mit anderen Worten wirkt die Spannkraft S auf eine Reduzierung der Breite des Schlitzes 7 hin, wobei die Spannkraft S in den Umfang des Mantelrohrs 21 im Klemmabschnitt eingeleitet wird. Dadurch steht an den erfindungsgemäßen Kraftübertragungselementen 8 eine ausreichend hohe Andruckkraft F zur Verfügung, um die Stelleinheit 3 in dem Mantelrohr 21 sicher reibschlüssig zu fixieren.

In der Querschnittdarstellung von Figur 8 ist eine alternative Ausführungsform ähnlich der Figur 7 dargestellt. Die Mitnehmerelemente 71 haben einander in Umfangsrichtung - d.h. bezogen auf den Umfang des Klemmabschnitts 23 in tangentialer Richtung - einander gegenüberliegende Innenflächen 72, und in Umfangsrichtung voneinander abgewandte Außenflächen, die Kontaktflächen 73 bilden. Die Kontaktflächen 73 und die Innenflächen 72 liegen parallel zueinander und zu einer Längsebene. Im Vergleich zur Ausführungsform der Figur 7 ist das Mantelrohr 2 umfänglich geschlossen, so dass die Mitnehmerelemente 71 durch einen Verbindungsabschnitt 74 miteinander verbunden sind.

Der Verbindungsabschnitt 74 ist von der Außenmantelfläche der Stelleinheit 3 und den Kontaktelementen 44 der Klemmschelle radial beabstandet, so dass die Kontaktelemente 44 der Klemmschelle 4 die Mitnehmerelemente 71 bei der Überführung der Spanneinrichtung 6 in die Fixierstellung zusammendrücken und dadurch die Stelleinheit 3 in dem Mantelrohr 2 geklemmt ist. Die Mitnehmerelemente 71 und der Verbindungsabschnitt 74 weisen im Querschnitt ein U-förmiges Profil auf.

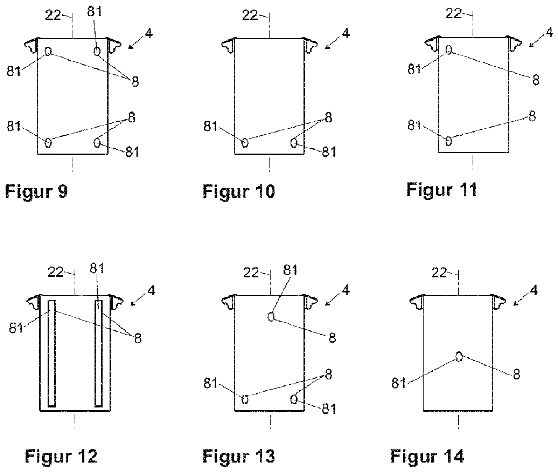

In der Figur 9 ist die Klemmschelle 4 der in den Figuren 1 bis 7 dargestellten Lenksäule dargestellt. Die Klemmschelle 4 umfasst vier Kraftübertragungselemente 8, wobei zwei der Kraftübertragungselemente 8 in Richtung der Längsachse 22 zueinander beabstandet sind und die weiteren zwei Kraftübertragungselemente 8 spiegelsymmetrisch bzgl. der Längsachse 22 zu den ersten zwei Kraftübertragungselementen 8 angeordnet sind.

In den Figuren 10 bis 14 sind unterschiedliche Ausführungsvarianten der Klemmschelle 4 in einer jeweiligen Draufsicht dargestellt.

In der Figur 10 ist eine Klemmschelle 4 in einer zweiten Ausführungsvariante dargestellt. Die Klemmschelle 4 umfasst zwei Kraftübertragungselemente 8, wobei die zwei Kraftübertragungselemente 8 spiegelsymmetrisch zueinander bzgl. der Längsachse 22 angeordnet sind, mit anderen Worten sind die zwei Kraftübertragungselemente 8 in Umfangsrichtung zueinander beabstandet.

In der Figur 11 ist eine Klemmschelle 4 in einer dritten Ausführungsvariante dargestellt. Die Klemmschelle 4 umfasst zwei Kraftübertragungselemente 8, wobei die Kraftübertragungselemente 8 in Richtung der Längsachse 22 zueinander beabstandet sind.

In der Figur 12 ist eine Klemmschelle 4 in einer vierten Ausführungsvariante dargestellt. Die Klemmschelle 4 umfasst zwei Kraftübertragungselemente 8, wobei die Kraftübertragungselemente 8 spiegelsymmetrisch zur Längsachse 22 angeordnet sind und sich in Richtung der Längsachse 22 erstrecken. Die Kraftübertragungselemente 8 sind leistenartig in Form einer Sicke ausgebildet.

Eine fünfte Ausführungsvariante der Klemmschelle 4 weist drei Kraftübertragungselemente 8 auf, wobei zwei der Kraftübertragungselemente 8 spiegelsymmetrisch bzgl. der Längsachse 22 angeordnet sind und das dritte Kraftübertragungselemente 8 in Richtung der Längsachse 22 beabstandet zu den zwei anderen Kraftübertragungselementen 8 angeordnet ist.

Die sechste Ausführungsvariante der Klemmschelle 4 weist ein einziges Kraftübertragungselement 8 auf, Dies entspricht der einfachsten Ausführungsform der erfindungsgemäßen Lösung. Das einzige Kraftübertragungselement ist in der Mitte des Bogenabschnitts 42 angeordnet.

### Bezugszeichenliste

- 1: Lenksäule
- 2: Manteleinheit
- 21: Mantelrohr
- 22: Längsachse
- 23: Klemmabschnitt
- 24: Klemmelemente
- 25: Einformung
- 26: Kontaktfläche
- 3: Stelleinheit
- 31: Lenkspindel
- 32: Befestigungsabschnitt
- 4: Klemmschelle
- 41a, b: Schenkel
- 42: Bogenabschnitt
- 43: Öffnung
- 44: Kontaktelemente
- 5: Trageinheit
- 51: Tragelement
- 52a, b: Seitenwange
- 53: Tragelement
- 54: Schwenkachse
- 55a, b: Öffnungen
- 6: Spanneinrichtung
- 61: Spannbolzen
- 62: Spannhebel
- 63: Spanngetriebe
- 64: Widerlager
- 7: Schlitz
- 71: Mitnehmerelemente
- 72: Innenflächen
- 73: Kontaktflächen
- 74: Verbindungsabschnitt
- 8: Kraftübertragungselemente
- 81: Einformungen
- 82: Kontaktfläche
- B: Bogenwinkel
- F: Andruckkraft
- S: Spannkraft
- L: Längsrichtung
- j: Länge Schlitz
- H: Höhenrichtung
- k: Länge Klemmschelle / Klemmabschnitt
- a: Abstand Kraftübertragungselemente

## Patentansprüche

1. Lenksäule (1) für ein Kraftfahrzeug, umfassend
eine Manteleinheit (2) mit einem Mantelrohr (21), das zumindest einen Klemmabschnitt (23) aufweist, eine in dem Mantelrohr (21) angeordnete Stelleinheit (3) mit einer darin um eine Längsachse (22) drehbar gelagerten Lenkspindel (31),
eine Klemmschelle (4), mit zwei einander quer zur Längsachse (22) gegenüberliegenden, über einen Bogenabschnitt (42) miteinander verbundenen Schenkeln (41a, 41b), zwischen denen der Klemmabschnitt (23) des Mantelrohrs (21) zumindest teilweise aufgenommen ist, wobei der Bogenabschnitt (42) einen Umfangsbereich des Klemmabschnitts (23) umschlingt,
eine Spanneinrichtung (6), die in einer Fixierstellung die Klemmschelle (4) auf dem Klemmabschnitt (23) des Mantelrohrs (21) verspannt, wobei der Klemmabschnitt (23) in der Fixierstellung auf der Stelleinheit (3) verspannt ist und die Stelleinheit (3) bezüglich einer Bewegung in Richtung der Längsachse (22) relativ zum Mantelrohr (21) festlegt und in einer Freigabestellung die Klemmschelle (4) von dem Klemmabschnitt (23) entspannt und eine Verstellung der Stelleinheit (3) relativ zum Mantelrohr (21) in Richtung der Längsachse (22) freigibt,
wobei die Spanneinrichtung (6) die Schenkel (41a, 41b) in Fixierstellung quer zur Längsachse (22) gegeneinander zusammendrückt,
und in dem Bogenabschnitt (42) der Klemmschelle (4) zumindest ein gegen den Umfangsbereich des Klemmabschnitts (23) vorstehendes Kraftübertragungselement (8) angeordnet ist, **dadurch gekennzeichnet,**
**dass** an dem Mantelrohr (21) Mitnehmerelemente (71) angeordnet sind und die Schenkel (41a, 41b) auf ihren einander zugewandten Seiten Kontaktelemente (44) aufweisen, die in Fixierstellung quer zur Längsachse (22) gegen die einander abgewandten Außenseiten der Mitnehmerelemente (71) andrückbar sind.

2. Lenksäule nach Anspruch 1, **dadurch gekennzeichnet, dass** das Mantelrohr (21) einen in Richtung der Längsachse (22) verlaufenden Schlitz (7) aufweist.

3. Lenksäule nach einem der vorangehenden Ansprüche, **dadurch gekennzeichnet, dass** ein Kraftübertragungselement (8) in Richtung der Längsachse (22) kürzer ist als der Bogenabschnitt (42).

4. Lenksäule nach einem der vorangehenden Ansprüche, **dadurch gekennzeichnet, dass** ein Kraftübertragungselement (8) sich in Umfangsrichtung über einen Teilbereich des Bogenabschnitts (42) erstreckt.

5. Lenksäule nach einem der vorangehenden Ansprüche, **dadurch gekennzeichnet, dass** zwei oder mehr Kraftübertragungselemente (8) mit Abstand (a) voneinander in Richtung der Längsachse (22) angeordnet sind.

6. Lenksäule nach einem der vorangehenden Ansprüche, **dadurch gekennzeichnet, dass** zwei oder mehr Kraftübertragungselemente (8) mit Abstand (B) voneinander in Umfangsrichtung angeordnet sind.

7. Lenksäule nach einem der vorangehenden Ansprüche, **dadurch gekennzeichnet, dass** ein Kraftübertragungselement (8) als einstückige Ausformung der Klemmschelle (4) ausgebildet ist.

8. Lenksäule nach einem der vorangehenden Ansprüche, **dadurch gekennzeichnet, dass** der Klemmabschnitt (23) im Umfangsbereich eines Kraftübertragungselements (8) in seiner Außenfläche eine Vertiefung (25) aufweist.

9. Lenksäule nach einem der vorangehenden Ansprüche, **dadurch gekennzeichnet, dass** der Klemmabschnitt (23) im Umfangsbereich eines Kraftübertragungselements (8) an seiner die Stelleinheit (3) umschließenden Innenfläche ein radial nach innen vorstehendes Klemmelement (24) aufweist.

10. Lenksäule nach einem der vorangehenden Ansprüche, **dadurch gekennzeichnet, dass** in den in Umfangsrichtung einander gegenüberliegenden Randbereichen des Schlitzes (7) an dem Mantelrohr (21) die Mitnehmerelemente (71) angeordnet sind.

11. Lenksäule nach einem der vorangehenden Ansprüche, **dadurch gekennzeichnet, dass** die Klemmschelle (4) und/oder das Mantelrohr (21) als Blechformteil ausgebildet ist.

## Claims

1. Steering column (1) for a motor vehicle, comprising a casing unit (2) having a casing tube (21) which has at least one clamping portion (23), an actuator unit (3) which is disposed in the casing tube (21) and has a steering spindle (31) which is mounted in said actuator unit (3) so as to be rotatable about a longitudinal axis (22);
a clamping bracket (4) having two legs (41a, 41b) which lie opposite one another so as to be transverse to the longitudinal axis (22) and are connected to one another by way of an arcuate portion (42), the clamping portion (23) of the casing tube (21) being at least partially received between said legs (41a, 41b), wherein the arcuate portion (42) wraps a circumferential region of the clamping portion (23);
a tensioning installation (6) which in a fixing position tensions the clamping bracket (4) on the clamping portion (23) of the casing tube (21), wherein the clamping portion (23) in the fixing position is tensioned on the actuator unit (3) and establishes the actuator unit (3) in terms of a movement relative to the casing tube (21) in the direction of the longitudinal axis (22), and in a releasing position slackens the clamping bracket (4) in relation to the clamping portion (23) and releases an adjustment of the actuator unit (3) relative to the casing tube (21) in the direction of the longitudinal axis (22);
wherein the tensioning installation (6) in the fixing position mutually compresses the legs (41a, 41b) transversely to the longitudinal axis (22); and at least one force transmission element (8) which projects towards the circumferential region of the clamping portion (23) is disposed in the arcuate portion (42) of the clamping bracket (4), **characterized in that**
entrainment elements (71) are disposed on the casing tube (21), and the legs (41a, 41b) on the mutually facing sides thereof have contact elements (44) which in the fixing position are able to be pressed transversely to the longitudinal axis (22) against the mutually facing external sides of the entrainment elements (71).

2. Steering column according to Claim 1, **characterized in that** the casing tube (21) has a slot (7) that runs in the direction of the longitudinal axis (22).

3. Steering column according to one of the preceding claims, **characterized in that** a force transmission element (8) in the direction of the longitudinal axis (22) is shorter than the arcuate portion (42).

4. Steering column according to one of the preceding claims, **characterized in that** a force transmission element (8) in the circumferential direction extends across a sub-region of the arcuate portion (42).

5. Steering column according to one of the preceding claims, **characterized in that** two or more force transmission elements (8) are disposed so as to be mutually spaced apart (a) in the direction of the longitudinal axis (22).

6. Steering column according to one of the preceding claims, **characterized in that** two or more force transmission elements (8) are disposed so as to be mutually spaced apart (B) in the circumferential direction.

7. Steering column according to one of the preceding claims, **characterized in that** a force transmission element (8) is configured as an integral moulding of the clamping bracket (4).

8. Steering column according to one of the preceding claims, **characterized in that** the clamping portion (23) in the external face thereof has a depression (25) in the circumferential region of a force transmission element (8).

9. Steering column according to one of the preceding claims, **characterized in that** the clamping portion (23) on the internal face thereof that encloses the actuator unit (3) has a radially inward-projecting clamping element (24) in the circumferential region of a force transmission element (8).

10. Steering column according to one of the preceding claims, **characterized in that** the entrainment elements (71) are disposed in the peripheral regions of the slot (7) on the casing tube (21) that lie opposite one another in the circumferential direction.

11. Steering column according to one of the preceding claims, **characterized in that** the clamping bracket (4) and/or the casing tube (21) are/is configured as a formed sheet-metal part.

## Revendications

1. Colonne de direction (1) destinée à un véhicule automobile et comprenant
une unité d'enveloppe (2) pourvue d'un tube d'enveloppe (21) qui comporte au moins une portion de serrage (23), une unité de réglage (3) qui est disposée dans le tube d'enveloppe (21) et dans laquelle une broche de direction (31) est montée à rotation sur un axe longitudinal (22),
un collier de serrage (4) pourvu de deux branches (41a, 41b) opposées l'une à l'autre transversalement à l'axe longitudinal (22) et reliées l'une à l'autre par une portion courbe (42) et entre lesquelles la portion de serrage (23) du tube d'enveloppe (21) est reçue au moins partiellement, la portion courbe (42) s'enroulant autour d'une zone périphérique de la portion de serrage (23),
un dispositif de serrage (6) qui serre, dans une position de fixation, le collier de serrage (4) sur la portion de serrage (23) du tube d'enveloppe (21), la portion de serrage (23) étant serrée dans la position de fixation sur l'unité de réglage (3) et fixant l'unité de réglage (3) par rapport à un mouvement dans la direction de l'axe longitudinal (22) relativement au tube d'enveloppe (21) et desserrant dans une position de libération le collier de serrage (4) de la portion de serrage (23) et permettant un réglage de l'unité de réglage (3) par rapport au tube d'enveloppe (21) dans la direction de l'axe longitudinal (22),
le dispositif de serrage (6) comprimant les branches (41a, 41b) l'une contre l'autre dans la position de fixation transversalement à l'axe longitudinal (22),
et au moins un élément de transmission de force (8) qui fait saillie vers la zone périphérique de la portion de serrage (23) étant disposé dans la portion courbe (42) du collier de serrage (4), **caractérisée en ce que** les éléments entraîneurs (71) sont disposés au niveau du tube d'enveloppe (21) et les branches (41a, 41b) comportent sur leurs côtés se faisant face des éléments de contact (44) qui peuvent être pressés, en position de fixation, transversalement à l'axe longitudinal (22) contre les côtés extérieurs, opposés l'un à l'autre, des éléments entraîneurs (71).

2. Colonne de direction selon la revendication 1, **caractérisée en ce que** le tube d'enveloppe (21) comporte une fente (7) s'étendant dans la direction de l'axe longitudinal (22).

3. Colonne de direction selon l'une des revendications précédentes, **caractérisée en ce qu'**un élément de transmission de force (8) est plus court que la portion courbe (42) dans la direction de l'axe longitudinal (22).

4. Colonne de direction selon l'une des revendications précédentes, **caractérisée en ce qu'**un élément de transmission de force (8) s'étend dans la direction périphérique sur une zone partielle de la portion courbe (42).

5. Colonne de direction selon l'une des revendications précédentes, **caractérisée en ce que** deux éléments de transmission de force (8) ou plus sont disposés à distance (a) l'un de l'autre dans la direction de l'axe longitudinal (22).

6. Colonne de direction selon l'une des revendications précédentes, **caractérisée en ce que** deux éléments de transmission de force (8) ou plus sont disposés à distance (B) l'un de l'autre dans la direction périphérique.

7. Colonne de direction selon l'une des revendications précédentes, **caractérisée en ce qu'**un élément de transmission de force (8) est réalisé sous la forme d'un moulage monobloc du collier de serrage (4) .

8. Colonne de direction selon l'une des revendications précédentes, **caractérisée en ce que** la portion de serrage (23) comporte un évidement (25) dans sa surface extérieure dans la région périphérique d'un élément de transmission de force (8).

9. Colonne de direction selon l'une des revendications précédentes, **caractérisée en ce que** la portion de serrage (23) comporte dans la région périphérique d'un élément de transmission de force (8) sur sa surface intérieure entourant l'unité de réglage (3) un élément de serrage (24) faisant saillie radialement vers l'intérieur.

10. Colonne de direction selon l'une des revendications précédentes, **caractérisée en ce que** les éléments entraîneurs (71) sont disposés dans les zones de bord, opposées les unes aux autres dans la direction périphérique, de la fente (7) au niveau du tube d'enveloppe (21).

11. Colonne de direction selon l'une des revendications précédentes, **caractérisée en ce que** le collier de serrage (4) et/ou le tube d'enveloppe (21) est/sont réalisé(s) sous la forme d'une pièce en tôle conformée.
